# FASCICULE DE BREVET EUROPEEN

(11) **EP 3 802 321 B1**
(45) Date de publication et mention de la délivrance du brevet: **07.12.2022**
(21) Numéro de dépôt: 19728070.4
(22) Date de dépôt: 04.06.2019
(51) Int. Cl.: B64D 11/06

(54) **DISPOSITIF DE FERMETURE D'UN ESPACE À L'INTÉRIEUR D'UN AVION**
VORRICHTUNG ZUM SCHLIESSEN EINES RAUMES IN EINEM FLUGZEUG
DEVICE FOR CLOSING A SPACE INSIDE AN AIRCRAFT

(30) Priorité: 05.06.2018 FR 1870648
(43) Date de publication de la demande: 14.04.2021
(73) Titulaire: Safran Seats, 78370 Plaisir (FR)
(72) Inventeur: BONNEFOY, Bastien, 36100 ISSOUDUN (FR); LIGONNIERE, Laurent, 36100 ISSOUDUN (FR)
(74) Mandataire: Marconnet, Sébastien
(86) Numéro de dépôt international: PCT/EP2019/064522
(87) Numéro de publication internationale: WO 2019/234041

(56) Documents cités:
- WO-A1-2017/066559
- WO-A1-2018/033599
- WO-A1-2018/093825
- WO-A2-2007/072045
- US-B2- 7 585 022
- US-B2- 9 027 880

## Description

La présente invention porte sur un espace à l'intérieur d'un avion avec un dispositif de fermeture amovible dudit espace. L'invention concerne également un agencement de sièges qui assure à la fois le confort et la sécurité des passagers, tout en prévoyant de préserver leur intimité.

Les sièges d'avion de type "Classe Affaires" offrent aux passagers différentes positions de confort, d'une position "assise" jusqu'à une position "couchette", dans laquelle le siège définit un plan de couchage sensiblement horizontal pour que le passager puisse s'allonger.

Des positions intermédiaires de confort sont aussi proposées, telles que la position "relax" dans laquelle le dossier est fortement incliné. Généralement, ces positions intermédiaires sont obtenues par l'inclinaison du dossier pivotant autour d'un axe horizontal et perpendiculaire à un axe d'extension du siège. Le passager peut alors rester sur le siège lors de transitions entre les différentes positions.

La couchette est généralement constituée notamment du dossier, de l'assise, d'un repose-jambes et d'un repose-pieds, ces derniers pouvant être fixes ou liés à la cinématique du siège.

Le document WO2017066559 décrit un ensemble de commande d'un déplacement d'une porte guidée par des rails supérieur et inférieur.

Le document WO2018033599 décrit un agencement de sièges comprenant des moyens de fermeture mobiles qui peuvent fermer au moins partiellement un passage transversal entre un siège avant et un siège arrière lorsque les moyens de fermeture sont déployés.

Le document US9027880 décrit un dispositif pour créer un espace fermé à l'intérieur d'un moyen de transport pour au moins un siège passager.

Le document WO2007072045 décrit un dispositif de fermeture d'un espace à l'intérieur d'un avion comportant deux montants contenant un dispositif de guidage d'un rideau et reliés entre eux par une barre de liaison.

L'invention vise à améliorer l'intimité d'un passager en lui permettant de s'isoler par rapport à son voisin immédiat. A cet effet, l'invention a pour objet un arrangement de sièges, notamment destiné à être installé dans une cabine d'avion, caractérisé en ce qu'il comprend:
- au moins un premier ensemble d'unités de sièges comportant une première unité de siège et une deuxième unité de siège situées l'une à côté de l'autre et comportant respectivement un siège apte à passer d'une position "assise" à une position "couchette",
- au moins un deuxième ensemble d'unités de sièges comportant une première unité de siège et une deuxième unité de siège situées l'une à côté de l'autre et comportant respectivement un siège apte à passer d'une position "assise" à une position "couchette",
- un espace central s'étendant entre le premier ensemble d'unités de sièges et le deuxième ensemble d'unités de sièges,
- et en ce que l'arrangement de sièges comprend des moyens de fermeture au moins en partie flexibles, lesdits moyens de fermeture étant mobiles entre une position rangée dans laquelle les moyens de fermeture sont dégagés de l'espace central et une position déployée dans laquelle les moyens de fermeture obturent l'espace central.

Selon une réalisation, l'espace central est un passage pour une personne autorisant une communication entre la première unité de siège et la deuxième unité de siège du premier ensemble.

Selon une réalisation, l'espace central s'étend au-dessus d'un meuble central continu entre le premier ensemble d'unités de sièges et le deuxième ensemble d'unités de sièges.

Selon une réalisation, les moyens de fermeture comportent un rideau, notamment réalisé au moins en partie en tissu, et un dispositif de rappel du rideau en position rangée.

Selon une réalisation, ledit arrangement comporte des moyens de maintien du rideau en position déployée, tels qu'une poignée destinée à coopérer avec un support et/ou un dispositif magnétique.

Selon une réalisation, le dispositif de rappel comporte au moins un organe élastique de rappel, tel qu'un ressort.

Selon une réalisation, le dispositif de rappel comporte un enrouleur muni d'un axe autour duquel au moins une partie du rideau est enroulé lorsque le rideau est en position rangée.

Selon une réalisation, l'enrouleur est disposé à l'horizontal en partie basse.

Selon une réalisation, l'enrouleur intègre un moteur électrique.

Selon une réalisation, ledit arrangement comporte des montants verticaux assurant un guidage en translation du rideau.

Selon une réalisation, ledit arrangement comporte une barre de guidage reliant le rideau aux montants verticaux.

Selon une réalisation, ledit arrangement comporte un boîtier dans lequel le rideau est logé en position rangée.

Selon une réalisation, le boîtier s'étend en saillie par rapport à un plancher de l'aéronef.

Selon une réalisation, ledit arrangement comporte des moyens de rigidification du rideau, tels que des cordons ou une plaque flexible.

Selon une réalisation, ledit arrangement comporte des moyens de génération d'un motif lumineux.

Selon une réalisation, les moyens de génération d'un motif lumineux comportent une source lumineuse et des fils translucides disposés dans une épaisseur du rideau.

Selon une réalisation, les moyens de génération d'un motif lumineux comportent une dalle lumineuse disposée à l'intérieur du rideau.

Selon une réalisation, les moyens de génération d'un motif lumineux comportent un assemblage de lampes, notamment de type LED.

Selon une réalisation, les moyens de fermeture comportent un rideau semi-flexible ayant une alternance de lames et de zones de pliage.

Selon une réalisation, des moyens de maintien du rideau semi-flexible en position rangée et en position déployée, notamment de type magnétique.

Selon une réalisation, les moyens de fermeture comportent un rideau, notamment réalisé au moins en partie en matériau à absorption acoustique;

L'invention a également pour objet un espace à l'intérieur d'un avion avec un dispositif de fermeture amovible dudit espace, selon la revendication 1.

Selon une réalisation, le rideau flexible est entièrement mobile en translation suivant la direction de déplacement de telle façon que le rideau flexible s'étend dans un plan en position stockée et en position déployée.

Selon une réalisation, le rideau flexible peut être déplacé suivant la direction de déplacement entre une position stockée dans laquelle le rideau flexible est plié en accordéon et une position déployée dans laquelle le rideau flexible s'étend dans un plan.

Selon une réalisation, le dispositif de guidage consiste en un dispositif à courroie.

Selon une réalisation, le dispositif à courroie comporte une première poulie liée en rotation au bâti, une deuxième poulie liée en rotation au bâti, et une courroie coopérant avec la première poulie et la deuxième poulie.

Selon une réalisation, un dispositif de liaison assure une liaison entre la courroie et l'ensemble à rideau.

Selon une réalisation, le dispositif comporte un ressort d'assistance au déploiement du rideau flexible.

Selon une réalisation, le ressort d'assistance au déploiement du rideau consiste en un ressort de torsion ayant une extrémité fixée sur le bâti et une extrémité fixée sur une poulie.

Selon une réalisation, le dispositif comporte un ressort de rappel du rideau configuré pour tendre le rideau lorsque ce dernier est en position déployée.

Selon une réalisation, le dispositif comporte au moins un galet rotatif apte à rouler le long d'une paroi du montant lorsque le rideau est déplacé d'une position à une autre.

Selon une réalisation, le dispositif comporte une butée d'arrêt contre laquelle vient en contact le galet rotatif lorsque le rideau est en position déployée.

Selon une réalisation, l'ensemble à rideau comporte une barre transversale rigide fixée à une extrémité du rideau flexible.

Selon une réalisation, une extrémité de la barre transversale est apte à coulisser à l'intérieur d'une rainure ménagée dans le montant.

L'invention concerne également un ensemble de sièges d'avion comportant:
- un siège avant associé à une coque avant et un siège arrière associé à une coque arrière, et
- un espace à l'intérieur d'un avion avec un dispositif de fermeture amovible
   tel que précédemment défini disposé entre le siège avant et le siège arrière.

Selon une réalisation, le dispositif de fermeture amovible comporte un bâti ayant un premier montant muni d'une interface de fixation pour assurer une fixation entre le premier montant et la coque avant du siège avant et un deuxième montant muni d'une interface de fixation pour assurer une fixation entre le deuxième montant et la coque arrière du siège arrière.

L'invention a également pour objet un avion comportant un ensemble de sièges tel que précédemment défini.

Bien entendu les différentes caractéristiques, variantes et/ou formes de réalisation de la présente invention peuvent être associées les unes avec les autres selon diverses combinaisons dans la mesure où elles ne sont pas incompatibles ou exclusives les unes des autres.

La présente invention sera mieux comprise et d'autres caractéristiques et avantages apparaîtront encore à la lecture de la description détaillée qui suit comprenant des modes de réalisation donnés à titre illustratif en référence avec les figures annexées, présentés à titre d'exemples non limitatifs, qui pourront servir à compléter la compréhension de la présente invention et l'exposé de sa réalisation et, le cas échéant, contribuer à sa définition, sur lesquelles:
[Fig. 1a] [Fig. 1b] Les figures 1a et 1b sont des vues schématiques de dessus de cabines d'avion intégrant différentes variantes de réalisation d'un arrangement de sièges selon la présente invention;
[Fig. 2a] La figure 2a est une vue en perspective illustrant un premier mode de réalisation des moyens de fermeture selon l'invention;
[Fig. 2b] La figure 2b est une vue de côté des moyens de fermeture comportant un dispositif de rappel à ressort;
[Fig. 2c] La figure 2c est une vue en perspective d'une poignée utilisée pour faire passer le rideau selon l'invention d'une position rangée à une position déployée;
[Fig. 3] La figure 3 est une vue de côté illustrant la structure d'un rideau constituant les moyens de fermeture selon l'invention;
[Fig. 4] La figure 4 est une vue en perspective illustrant un deuxième mode de réalisation des moyens de fermeture selon l'invention;
[Fig. 5] La figure 5 est une vue en perspective illustrant un troisième mode de réalisation des moyens de fermeture selon l'invention;
[Fig. 6] La figure 6 est une vue de côté d'un ensemble de deux sièges montrant l'intégration de moyens de rigidification à l'intérieur du rideau selon la présente invention;
[Fig. 7a] [Fig. 7b] [Fig. 7c] Les figures 7a, 7b, et 7c sont des vues illustrant trois modes de réalisation de moyens de génération d'un motif lumineux dans les moyens de fermeture selon la présente invention;
[Fig. 8] La figure 8 est une vue de face des différents éléments composant un rideau semi-flexible selon la présente invention;
[Fig. 9] La figure 9 est une vue détaillée des moyens de maintien magnétiques du rideau semi-flexible en position déployée;
[Fig. 10] La figure 10 est une vue en perspective d'un rideau semi-flexible ayant une configuration en accordéon en position rangée;
[Fig. 11] La figure 11 est une vue en perspective d'un dispositif de fermeture amovible d'un espace selon la présente invention;
[Fig. 12] La figure 12 est une vue en perspective du dispositif de fermeture de la figure 11 sans le montant de façon à faire apparaître le dispositif de guidage en translation du rideau;
[Fig. 13a] [Fig. 13b] [Fig. 13c] Les figures 13a, 13b, 13c sont des vues de face d'un dispositif de fermeture amovible selon l'invention respectivement en position stockée, dans une position intermédiaire, et dans une position déployée;
[Fig. 14] La figure 14 est une vue en perspective de la partie basse du dispositif de fermeture amovible selon l'invention montrant le ressort de rappel du rideau;
[Fig. 15] La figure 15 est une vue en perspective de la partie basse du dispositif de fermeture amovible selon l'invention montrant le ressort d'assistance au déploiement du rideau;
[Fig. 16] La figure 16 est une vue en perspective de la partie haute du dispositif de fermeture amovible selon l'invention montrant le dispositif de liaison établissant la liaison entre le rideau et la courroie du dispositif de guidage;
[Fig. 17a] [Fig. 17b] Les figures 17a et 17b sont respectivement des vues en perspective et de dessus illustrant l'intégration d'un dispositif de fermeture amovible selon l'invention dans un ensemble de sièges d'avion;
[Fig. 18] La figure 18 est une vue de côté illustrant une variante de réalisation du dispositif de fermeture amovible selon l'invention respectivement en position stockée et en position déployée;
[Fig. 19] La figure 19 est une vue de côté illustrant une autre variante de réalisation du dispositif de fermeture amovible selon l'invention respectivement en position stockée et en position déployée.

Il est à noter que, sur les figures, les éléments structurels et/ou fonctionnels communs aux différents modes de réalisation peuvent présenter les mêmes références. Ainsi, sauf mention contraire, de tels éléments disposent de propriétés structurelles, dimensionnelles et matérielles identiques.

Les termes relatifs du type "horizontal" ou "vertical" sont entendus par référence à un dispositif de fermeture amovible selon l'invention en position d'utilisation.

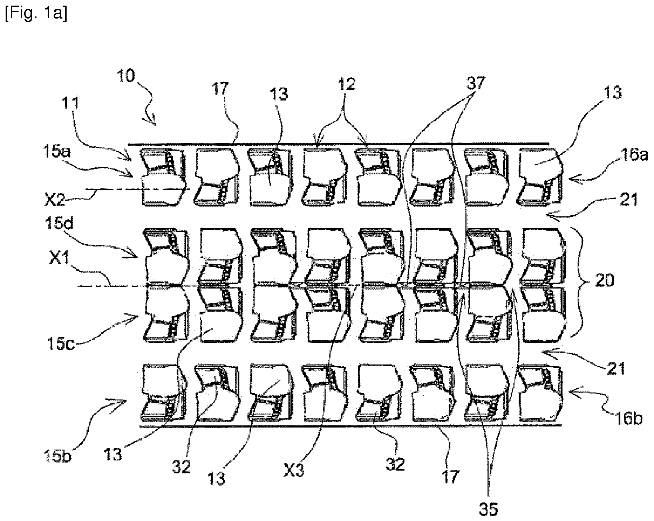

La figure 1a montre une cabine d'avion 10 s'étendant selon un axe longitudinal X1 comportant un arrangement de sièges 11. L'arrangement de sièges 11 selon la présente invention comprend une pluralité d'unités de sièges 12 comportant respectivement un siège individuel 13. Avantageusement, le siège 13 est apte à passer d'une position "assise", correspondant à la position utilisée notamment lors des phases d'arrêt, de décollage, et d'atterrissage de l'avion, et une position "couchette", dans laquelle le siège 13 définit un plan de couchage sensiblement horizontal pour le passager. En particulier, la position "assise" et la position "couchette" constituent des configurations du siège 13 dans deux positions extrêmes. Selon des variantes de réalisation, le siège 13 pourra également prendre des positions intermédiaire, dites positions relax, entre ces deux positions extrêmes.

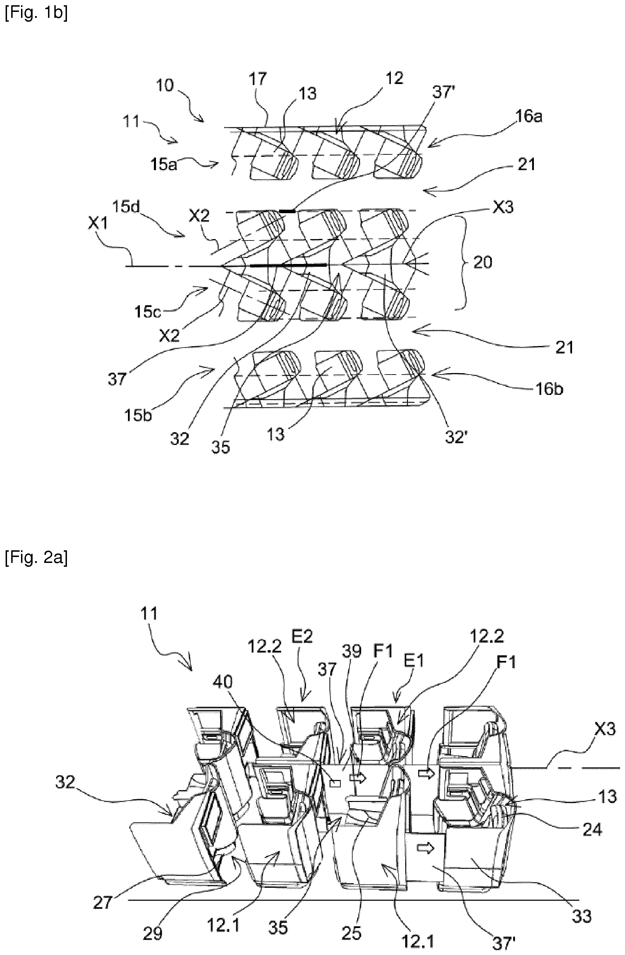

La pluralité d'unités de sièges 12 sont disposées selon au moins une rangée 15a s'étendant préférentiellement selon l'axe longitudinal X1 de la cabine d'avion 10. Selon l'exemple présenté sur les figures 1a et 1b, la pluralité d'unités de sièges 12 sont disposées selon quatre rangées 15a, 15b, 15c, et 15d.

Selon divers modes de réalisation particuliers, à l'intérieur de la rangée 15a, respectivement les rangées 15a, 15b, 15c et 15d, l'unité de sièges 12 peut être orientée de telle façon que le siège 13 soit tourné vers l'avant et/ou vers l'arrière de l'avion. Les sièges 13 peuvent former un angle non nul par rapport à l'axe longitudinal X1 comme indiqué plus en détails ci-après.

Il est à noter que les termes "avant" et "arrière" employés en relation avec l'expression "unité de siège" définissent localement une position relative du siège 13 à l'intérieur de la rangée 15a, respectivement les rangées 15a, 15b, 15c et 15d, et ne se réfèrent aucunement à une orientation du siège 13 à l'intérieur de la cabine d'avion 10. En d'autres termes, l'expression "unité de siège avant" signifie que l'unité de siège est positionnée directement devant une autre unité de siège à l'intérieur de la rangée, tandis que l'expression "unité de siège arrière" signifie que l'unité de siège est positionnée directement derrière une autre unité de siège à l'intérieur de la rangée.

Selon l'exemple de réalisation présenté, l'arrangement de sièges 11 comporte deux groupes latéraux 16a, 16b comportant des unités de sièges 12. Les deux groupes latéraux 16a, 16b sont constitués chacun respectivement par une rangée 15a, 15b d'unités de sièges 12 positionnées le long d'une paroi latérale 17 du fuselage de la cabine d'avion 10. L'arrangement de sièges 11 comporte également un groupe central 20. Le groupe central 20 est préférentiellement constitué de deux rangées 15c, 15d d'unités de sièges 12. Dans un tel agencement, les deux rangées 15c, 15d d'unités de sièges 12 sont accolées latéralement l'une par rapport à l'autre.

Les groupes latéraux 16a, 16b sont respectivement séparés du groupe central 20 par un couloir de circulation 21. Selon la configuration présentée en figure 1a, deux couloirs de circulation 21 sont donc prévus dans la cabine d'avion 10, spécifiquement entre chaque groupe latéral 16a, 16b et le groupe central 20. En variante, les deux groupes latéraux 16a, 16b pourront être formés chacun par plusieurs rangées d'unités de sièges 12.

Chaque siège 13 présente un axe d'extension X2 correspondant sensiblement à une direction d'extension longitudinale du siège 13. En particulier, l'axe d'extension X2 correspond à la direction d'extension longitudinale du siège 13 en position "couchette". En l'occurrence, l'axe X2 est sensiblement parallèle par rapport à l'axe longitudinal X1 de la cabine d'avion, c'est-à-dire qu'il forme un angle inférieur à 10 degrés par rapport à l'axe X1.

En variante, comme cela est représenté sur la figure 1b, l'axe d'extension X2 d'un siège forme un angle non nul supérieur à 10 degrés avec l'axe longitudinal X1 de la cabine d'avion 10. On pourra alors définir des configurations de sièges en chevron dans laquelle les deux unités de sièges 12 forment un « V ». Les unités de sièges 12 pourront être tournées vers l'intérieur de l'ensemble comme cela est le cas sur la figure 1b, de sorte que la pointe de la forme en « V » est située devant les unités de sièges. Alternativement, les unités de sièges 12 sont tournées vers un couloir de circulation 21 adjacent de sorte que la pointe de la forme en « V » est située derrière des dossiers 24 des sièges 13 (configuration en chevron inversé ou "reverse herringbone" en anglais). Ainsi agencé, chaque passager a un accès direct au couloir de circulation 21 depuis le siège 13.

L'optimisation de la densité de cabine d'avion 10 par rapport à une largeur de cette dernière est notamment possible en modifiant l'angle de l'axe d'extension X2 des sièges 13 par rapport à l'axe longitudinal X1 de la cabine d'avion 10.

Selon divers modes de réalisation, les axes d'extension X2 des sièges 13 peuvent former sensiblement le même angle par rapport à l'axe longitudinal X1 de la cabine d'avion 10. De plus, les axes d'extension X2 de deux sièges 13 adjacents du groupe central 20 peuvent couper l'axe longitudinal X1 de la cabine d'avion 10 sensiblement en un même point. Alternativement, les deux sièges 13 latéralement adjacents peuvent être décalés l'un par rapport à l'autre selon l'axe longitudinal X1, de sorte que les axes d'extension X2 des deux sièges 13 latéralement adjacents coupent l'axe longitudinal X1 en des points différents.

Comme cela est particulièrement illustré par la figure 2a, chaque unité de siège 12 comporte un siège 13 ayant un dossier 24, notamment réglable en inclinaison, et une assise 25, notamment potentiellement réglable en inclinaison. De plus, le siège 13 pourra comprendre un repose-jambes (non représenté), notamment réglable en inclinaison. De plus, l'unité de siège 12 peut comporter un repose-pieds 27.

Le repose-pieds 27 peut consister en un coussin fixe, notamment agencé dans un logement 29 dédié à recevoir les pieds du passager. Préférentiellement, le repose-pieds 27 se situe dans le prolongement du siège 13 lorsque ce dernier se trouve en position "couchette".

L'unité de siège 12 peut également comporter un meuble latéral 32, susceptible notamment de servir de tablette fixe et/ou de rangement de tablette repas.

L'unité de siège 12 peut également comporter une coque fixe 33 apte à assurer une séparation. Une telle coque fixe 33 permet donc de garantir l'intimité de chaque passager. De façon avantageuse, afin de remplir une telle fonction de garantie d'intimité, la coque fixe 33 s'étend autour du dossier 24 du siège 13 afin de créer un espace intérieur, en partie clos, dans lequel est agencé le siège 13.

Lorsque deux unités de sièges 12 sont disposées l'une derrière l'autre, avantageusement, les deux unités de sièges 12 sont agencées de sorte à définir un recouvrement vertical, au moins partiel, entre elles. Le recouvrement vertical entre les deux unités de sièges 12 peut consister, tel que représenté, en un positionnement du logement 29 du repose-pieds 27 de l'unité de siège 12 "arrière" sous le meuble latéral 32 de l'unité de siège 12 "avant" correspondante.

On distingue en outre une unité de siège 12 "gauche" dans laquelle le meuble latéral 32 est disposé à gauche du siège 13 et une unité de siège 12 "droite" dans laquelle le meuble latéral 32 est disposé à droite du siège 13. Une rangée 15a, 15b, 15c, 15d est formée par une alternance d'unités de sièges 12 "gauche" et d'unités de sièges 12 "droite", de sorte que chaque siège 13 d'une unité de siège 12 arrière est situé en face d'un meuble latéral 32 de l'unité de siège 12 avant comportant le logement 29 du repose-pieds 27 correspondant.

Tel que visible notamment sur les figures 2a, 4, et 5, l'arrangement 11 comporte au moins un premier ensemble E1 d'unités de sièges arrière comportant une première unité de siège 12.1 et une deuxième unité de siège 12.2 situées l'une à côté de l'autre. Les unités de sièges 12.1 et 12.2 de l'ensemble E1 appartiennent à deux rangées différentes 15c, 15d. Les unités de sièges 12.1, 12.2 de l'ensemble E1 sont accolées latéralement l'une à l'autre en étant jointives ou séparées entre elles au maximum de quelques centimètres.

Un deuxième ensemble E2 d'unités de sièges avant comporte une première unité de siège 12.1 et une deuxième unité de siège 12.2 situées l'une à côté de l'autre. Les unités de sièges 12.1 et 12.2 de l'ensemble E2 appartiennent à deux rangées différentes 15c, 15d. Les unités de sièges 12.1, 12.2 de l'ensemble E2 sont accolées latéralement l'une à l'autre en étant jointives ou séparées entre elles au maximum de quelques centimètres.

Les unités de sièges 12.1 et 12.2 d'un ensemble donné E1, E2 sont d'un même type "gauche" ou "droit".

Un espace central 35 s'étend entre le premier ensemble E1 d'unités de sièges et le deuxième ensemble E2 d'unités de sièges. Cet espace central 35 s'étend suivant un axe X3 de l'ensemble E1, notamment un axe de symétrie de l'ensemble E1.

Dans le mode de réalisation de la figure 1a, l'espace central 35 est un passage pour une personne autorisant une communication entre la première unité de siège 12.1 et la deuxième unité de siège 12.2 du premier ensemble E1. Le passage central 35 s'étend entre les coques 33 des unités de sièges de l'ensemble E1 et des unités de siège 12 de l'ensemble E2. Dans ce cas, des moyens de fermeture 37 décrits plus en détails ci-après s'étendent suivant une hauteur du siège en position déployée.

En variante, dans le mode de réalisation de la figure 1b, l'espace central 35 s'étend au-dessus d'un meuble central 32' continu entre le premier ensemble d'unités de sièges E1 et le deuxième ensemble d'unités de sièges E2. Dans ce cas, les moyens de fermeture 37 sont disposés au-dessus du meuble central 32'.

Les moyens de fermeture 37 disposés suivant l'espace central 35 sont aptes à assurer la fermeture de l'espace central 35. Lesdits moyens de fermeture 37 au moins en partie flexibles sont mobiles entre une position rangée dans laquelle les moyens de fermeture 37 sont dégagés de l'espace central 35 et une position déployée dans laquelle les moyens de fermeture 37 obturent l'espace central 35. Les moyens de fermeture 37 s'étendent alors suivant l'axe X3 de l'ensemble E1. En conséquence, le passager assis dans un siège 13 de l'ensemble E1 est séparé de son voisin immédiat par les moyens de fermeture 37. Le passager se retrouve ainsi assis dans une zone d'intimité définie par l'espace clos ainsi créé par la coque 33 et les moyens de fermeture 37.

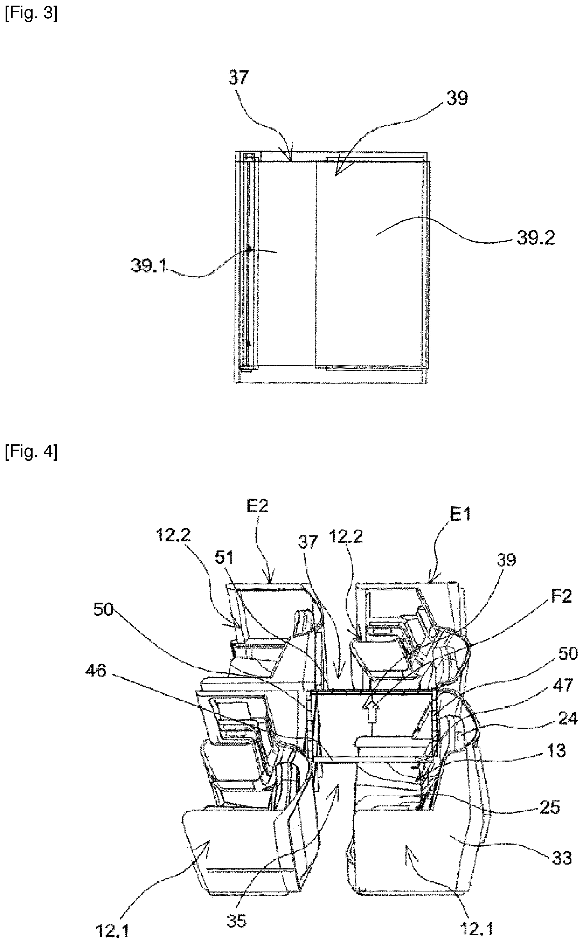

Dans le mode de réalisation des figures 2a, 4, et 5, les moyens de fermeture 37 comportent un rideau 39, notamment réalisé en tissu, et un dispositif de rappel 40 du rideau 39 en position rangée. Comme on peut le voir sur la figure 3, le rideau 39 pourra comporter une première partie 39.1 réalisée dans un tissu fin, dite partie technique, et une deuxième partie 39.2 réalisée dans un matériau épais fixée sur la première partie 39.1 en étant par exemple cousue sur cette première partie 39.1. La deuxième partie 39.2 est plus épaisse que la première partie 39.1, c'est la raison pour laquelle les termes "fin" et "épais" doivent être compris relativement à l'épaisseur de ces deux parties 39.1 et 39.2. La deuxième partie 39.2 est dite partie esthétique car elle pourra présenter des motifs, comme par exemple le logo d'une compagnie aérienne. La deuxième partie 39.2 pourra par exemple être réalisée en tissu, en alcantara, ou en cuir pour augmenter la qualité perçue de l'ensemble. Le rideau 39 pourra être réalisé au moins en partie en matériau à absorption acoustique.

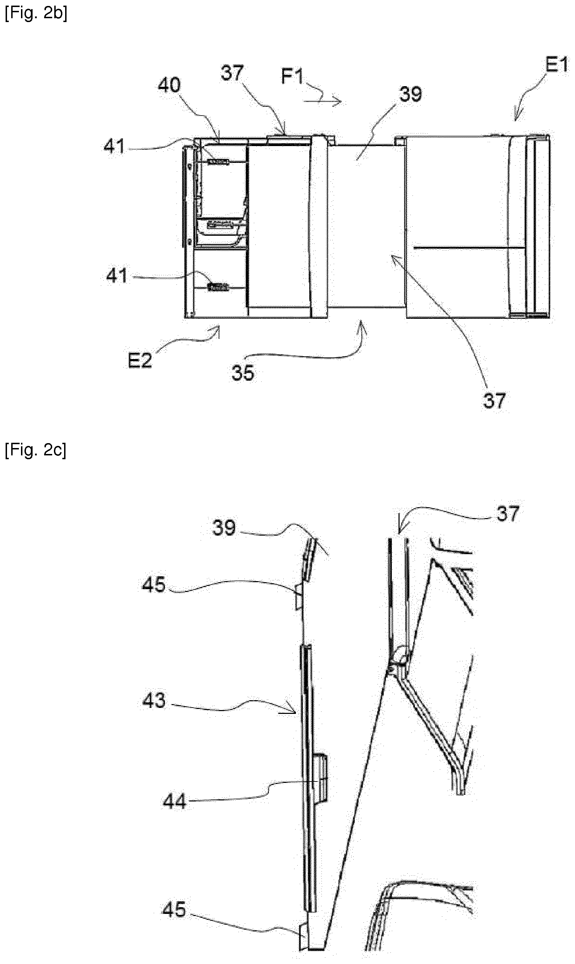

Dans le mode de réalisation de la figure 2a, le dispositif de rappel 40 comporte au moins un organe élastique de rappel 41, tel qu'un ressort. Dans l'exemple représenté à la figure 2b, on utilise deux ressorts 41 fixés chacun d'une part à un ensemble de siège E1 ou E2 et d'autre part au rideau 39. Le rideau 39 pourra être déployé horizontalement suivant la flèche F1.

Le rideau 39 comporte en outre des moyens de maintien 43 dudit rideau 39 en position déployée. Comme cela est montré sur la figure 2c, ces moyens de maintien 43 comportent par exemple une poignée 44 formant crochet destinée à coopérer avec un support fixe, notamment en forme d'équerre. On pourra également utiliser en combinaison un ou plusieurs dispositifs magnétiques de maintien 45. Les moyens de maintien 43 pourront comporter un fusible mécanique permettant de libérer l'espace central 35 lorsqu'un effort limite est appliqué sur les moyens de maintien 43. Alternativement, le rideau 39 pourra comporter des coutures fusibles.

Dans le mode de réalisation de la figure 4, le dispositif de rappel 40 comporte un enrouleur 46 muni d'un axe autour duquel au moins une partie du rideau 39 est enroulé lorsque le rideau 39 est en position rangée.

L'enrouleur 46 est disposé à l'horizontal en partie basse, notamment sur le plancher. L'enrouleur 46 permet de dégager un maximum d'espace entre les passagers centraux lorsque le rideau 39 est en bas en position rangée. Alternativement, l'enrouleur 46 s'étend au-dessus d'un meuble central 32' séparant les unités de siège 12.1, 12.2 de l'ensemble E1 (cf. figure 1b).

L'enrouleur 46 pourra intégrer un moteur électrique 47 associé à un système de courroie.

Des montants verticaux 50 assurent un guidage en translation du rideau 39 de haut en bas et inversement. La liaison entre les montants 50 et le rideau 39 est de type mâle/femelle, ou est une liaison glissière, ou est une liaison à courroie dentée avec pignon dans le cas d'une motorisation électrique.

Une barre de guidage 51 pourra relier le rideau 39 aux montants 50. La barre de guidage 51 s'étend horizontalement à une extrémité du rideau 39. Le rideau 39 pourra être déployé verticalement suivant la flèche F2.

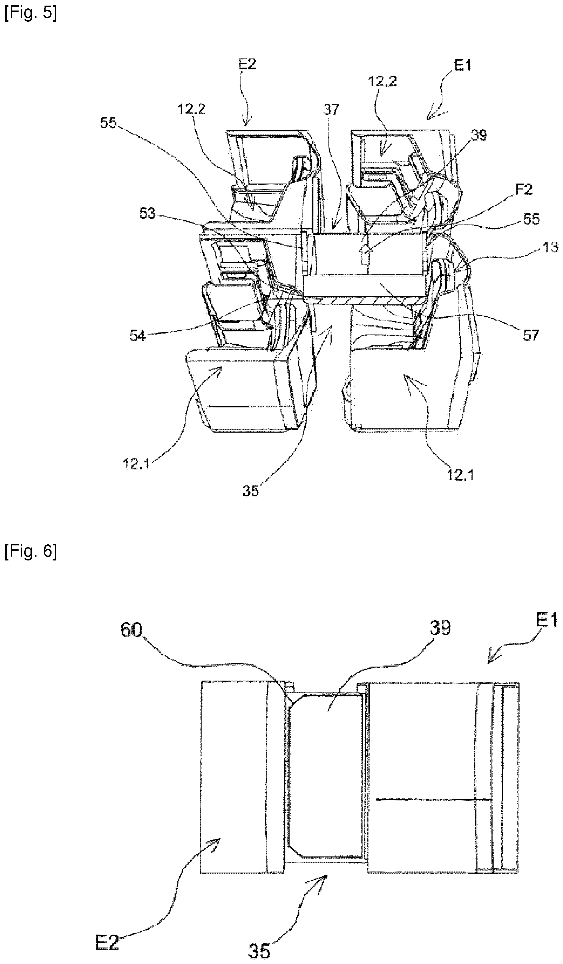

Dans le mode de réalisation de la figure 5, le dispositif de rappel 40 comporte un enrouleur 53. L'enrouleur 53 est disposé à l'horizontal en partie basse. L'enrouleur 53 permet d'ouvrir un maximum d'espace entre les passagers centraux quand le rideau 39 est en bas en position rangée.

L'enrouleur 53 pourra intégrer un moteur électrique 54 associé à un système de courroie.

Des montants verticaux 55 assurent un guidage en translation du rideau 39 de haut en bas et inversement.

La liaison entre les montants 55 et le rideau 39 est de type mâle/femelle, ou est une liaison glissière, ou est une liaison à courroie dentée avec pignon dans le cas d'une motorisation électrique.

Avantageusement le rideau 39 est logé en position rangée dans un boîtier rigide 57. Ce boîtier 57 s'étend horizontalement suivant l'axe X3 de l'ensemble E1. Ce boîtier 57 s'étend en saillie par rapport au plancher de l'aéronef de façon à former un muret de séparation entre les passagers. On évite ainsi l'interférence entre les pieds des passagers voisins. Contrairement au mode de réalisation de la figure 4, le rideau 39 n'est pas enroulé en position rangée mais s'étend dans un plan. Le rideau 39 pourra être déployé verticalement suivant la flèche F3.

Comme on peut le voir sur la figure 6, le rideau 39 pourra comporter des moyens de rigidification 60, tels que des cordons et/ou des bords rigides et/ou une plaque rigide ou semi-rigide. Ces moyens 60 pourront s'étendre suivant un contour du rideau 39.

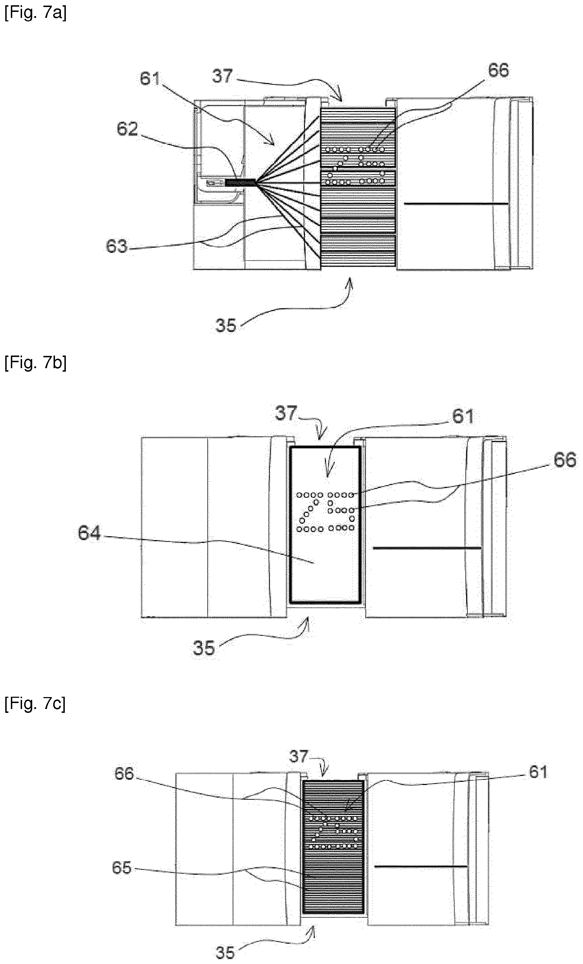

Dans le mode de réalisation des figures 7a, 7b, et 7c, le rideau 39 intègre des moyens de génération 61 d'un motif lumineux. Ces moyens 61 pourront comporter une source lumineuse 62 et des fils translucides 63 disposés dans une épaisseur du rideau 39, tel que cela est illustré par la figure 7a, ou une dalle lumineuse 64, de préférence souple, disposée à l'intérieur ou sur du rideau 39, tel que cela est illustré par la figure 7b. Alternativement, on pourra utiliser un assemblage de lampes 65, notamment de type LED, tel que cela est illustré par la figure 7c. Une configuration de perforations 66 réalisées dans le rideau 39 pourra permettre de faire apparaître le motif souhaité.

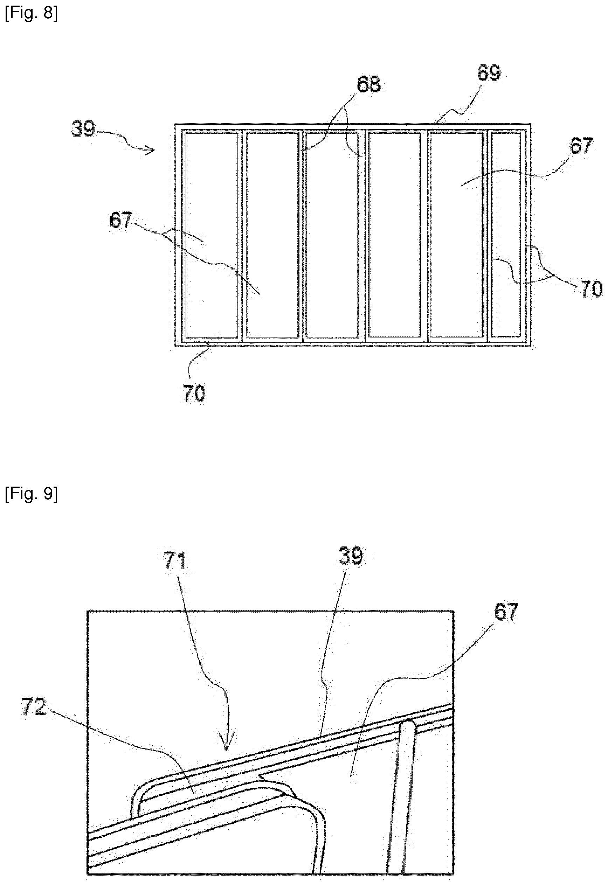

Dans le mode de réalisation des figures 8 à 10, les moyens de fermeture 37 comportent un rideau 39 semi-flexible ayant une alternance de lames verticales 67 et de zones de pliage 68. Le rideau 39 semi-flexible est pliable au moins en partie suivant les zones 68.

Le rideau 39 semi-flexible est formé par une pluralité de lames 67 espacées régulièrement entre elles et recouvertes par du tissu 69, les portions du tissu s'étendant entre deux lames 67 adjacentes formant les zones de pliage 68. De la colle 70 pourra être disposée entre les lames 67 et sur tout le contour du tissu pour assurer l'assemblage de deux couches de tissu entre lesquelles sont maintenues les lames 67. Les lames 67 pourront être réalisées dans un matériau plastique rigide ou semi-rigide.

Comme on peut le voir sur la figure 9, on pourra utiliser des moyens de maintien 71 du rideau 39 en position rangée et en position déployée, notamment de type magnétique. On pourra ainsi utiliser un aimant 72 pour réaliser un collage magnétique du bord d'extrémité libre du rideau 39 contre un support métallique fixe solidaire d'une unité de siège 12.

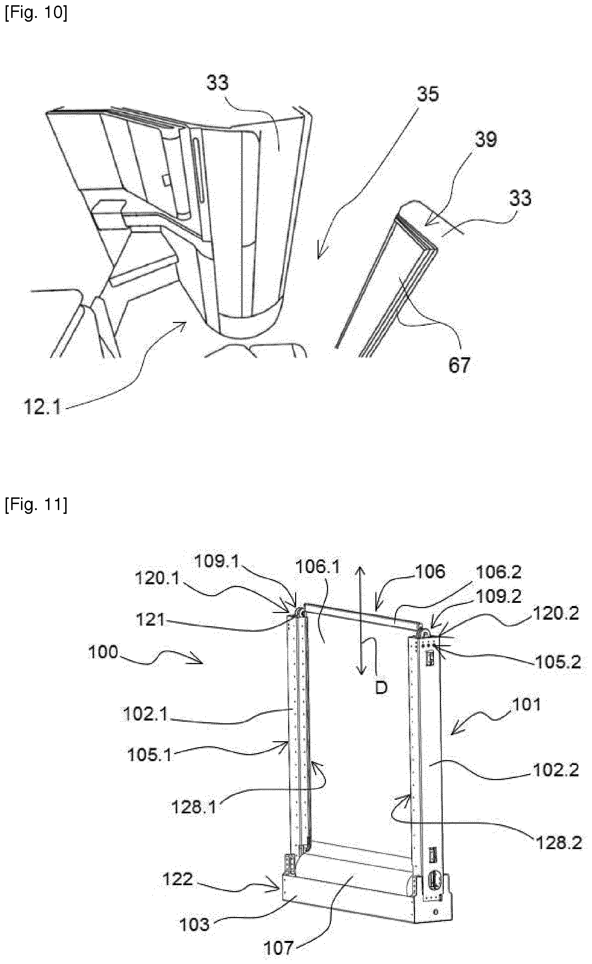

Le rideau 39 semi-flexible pourra être configuré pour que les lames verticales 67 soient repliées les unes sur les autres en position rangée, tel que montré sur la figure 10. Le rideau 39 présente alors une structure en accordéon dans laquelle les lames 67 se superposent les unes sur les autres sur la majorité de leur surface. En variante, les lames 67 pourront être orientées horizontalement.

Un dispositif de fermeture 37' analogue au dispositif 37 pourra être installé pour obturer de façon amovible le passage du côté du couloir 21, tel que montré sur la figure 2a.

L'invention pourra également être mise en oeuvre avec des sièges installés dans d'autres moyens de transport, comme par exemple des sièges de bus, de trains, ou de bateaux.

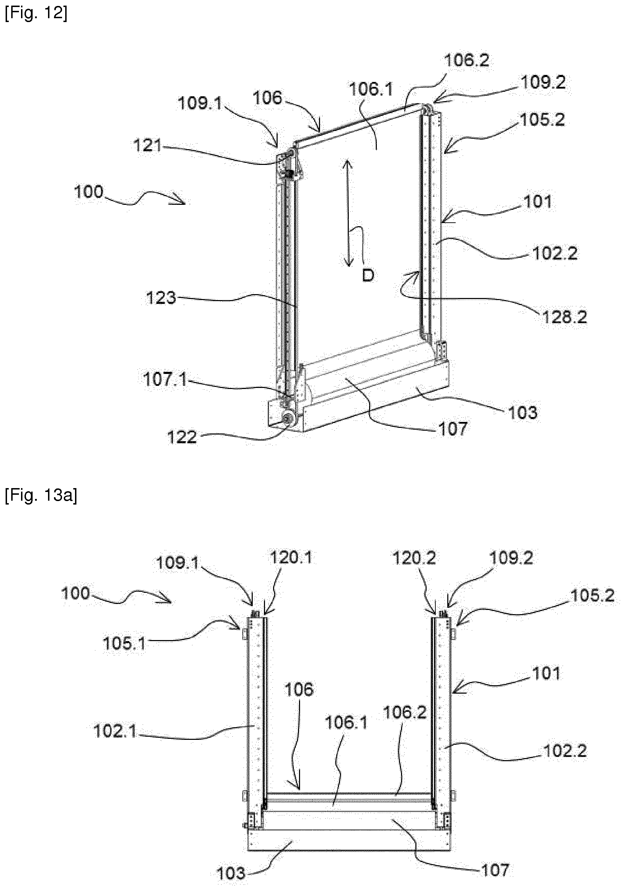

Les figures 11 et 12 montrent un dispositif de fermeture amovible 100 d'un espace à l'intérieur d'un avion. L'espace à obturer pourra être un espace séparant deux sièges adjacents ou un espace séparant un siège par rapport à un couloir de circulation.

Le dispositif 100 comporte un bâti 101 comprenant un premier montant 102.1 et un deuxième montant 102.2 reliés entre eux par un caisson 103. Les montants 102.1, 102.2 sont orientés verticalement, tandis que le caisson 103 est disposé horizontalement, de sorte que le bâti 101 présente globalement une forme de U.

Le bâti 101 comporte au moins une interface de fixation 105.1, 105.2 avec un élément structurel, tel qu'une coque de siège ou tout autre élément structurel situé à l'intérieur d'une cabine d'avion. En l'occurrence, le premier montant 102.1 comporte une interface de fixation 105.1 avec une coque d'un premier siège et le deuxième montant 102.2 comporte une interface de fixation 105.2 avec une coque d'un deuxième siège.

Un ensemble à rideau 106 comporte un rideau flexible 106.1 apte à s'enrouler autour d'un rouleau 107. A cette fin, le rouleau 107 comporte un axe 107.1 monté rotatif par rapport au bâti 101. En outre, une barre transversale 106.2 rigide est fixée à une extrémité du rideau flexible 106.1. Ainsi l'ensemble à rideau 106 est formé par le rideau 106.1 ainsi que la barre transversale 106.2.

Le rideau flexible 106.1 est de préférence réalisé en tissu. Le rideau 106.1 pourra également être réalisé au moins en partie en alcantara ou en cuir pour augmenter la qualité perçue de l'ensemble. Le rideau 106.1 pourra être réalisé au moins en partie en matériau à absorption acoustique.

La barre transversale 106.2 est de préférence réalisée dans un matériau métallique, notamment en aluminium. En variante, la barre transversale 106.2 pourra être réalisée en plastique ou dans un matériau composite ou tout autre matériau rigide envisageable.

Le rouleau 107 est disposé au moins en partie à l'intérieur du caisson 103. Un capot (non représenté) pourra être fixé sur le caisson 103 pour cacher une partie du rouleau 107 qui dépasse du caisson 103.

Comme on peut le voir sur la figure 12, au moins un dispositif de guidage 109.1, 109.2 assure un guidage en translation du rideau 106.1 par rapport à un montant 102.1, 102.2 correspondant entre une position stockée et une position déployée. En l'occurrence, on prévoit deux dispositifs de guidage 109.1, 109.2 disposés chacun au moins en partie à l'intérieur d'un logement 120.1, 120.2 délimité par un montant 102.1, 102.2 correspondant. A cet effet, un montant 102.1, 102.2 pourra être constitué par de la tôle pliée de façon à former un logement 120.1, 120.2 correspondant. En variante, un montant 102.1, 102.2 pourra être constitué de plusieurs parois indépendantes assemblées entre elles par vissage ou mécano-soudage.

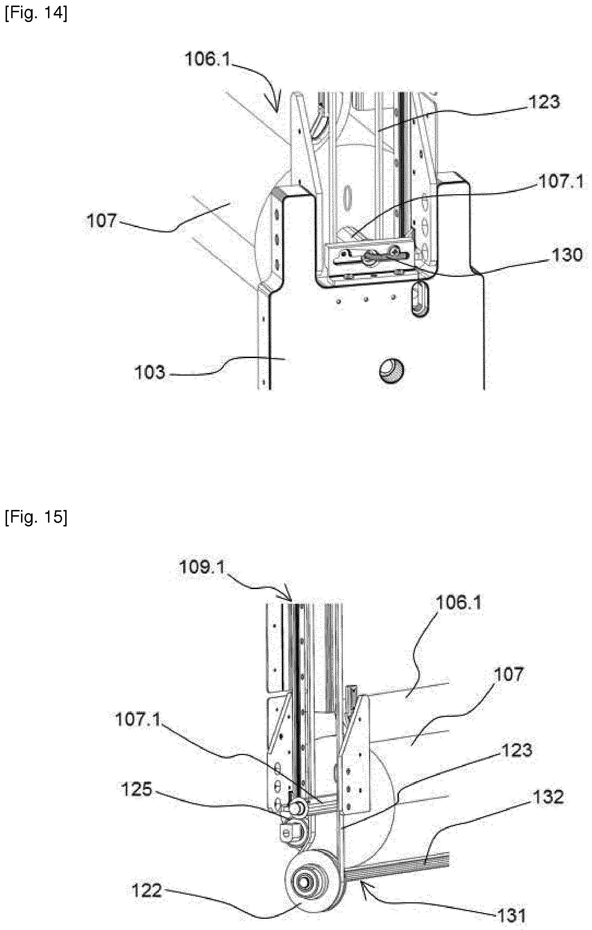

Avantageusement, un dispositif de guidage 109.1, 109.2 en translation consiste en un dispositif à courroie. Un dispositif à courroie 109.1, 109.2 comporte une première poulie 121 liée en rotation au bâtit 101, en l'occurrence à une partie haute d'un montant 102.1, 102.2 correspondant, une deuxième poulie 122 liée en rotation au bâti, en l'occurrence à une portion latérale du caisson 103 correspondante, et une courroie 123 coopérant avec la première poulie 121 et la deuxième poulie 122. La courroie 123 pourra être lisse ou crantée ou prendre la forme d'une chaîne. De préférence, une roue de tension 125 visible sur la figure 15 assure une mise sous tension de la courroie 123. En variante, il sera possible d'utiliser plus de deux poulies 121, 122 pour chaque dispositif de guidage 109.1, 109.2.

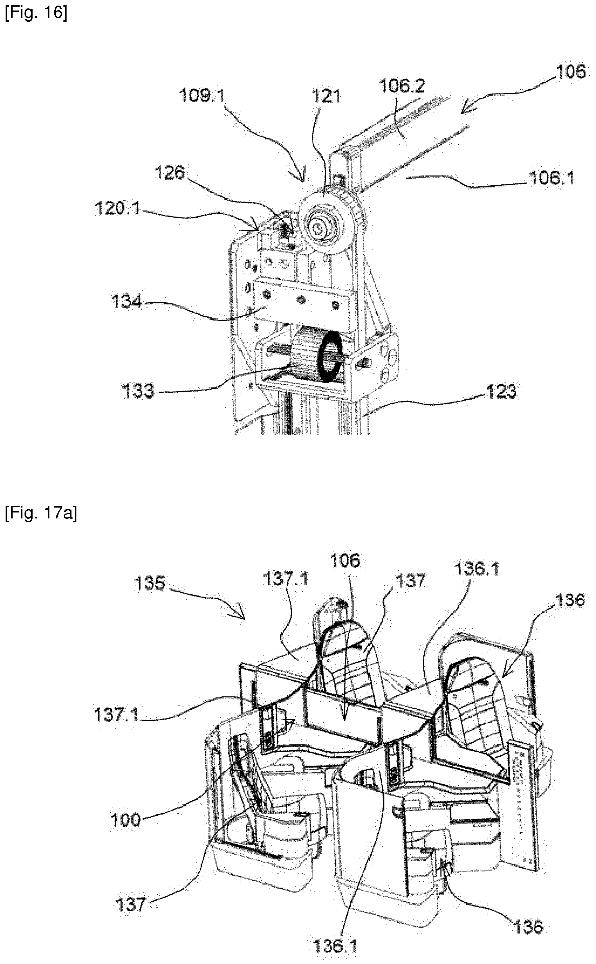

Comme cela est montré sur la figure 16, un dispositif de liaison 126 assure une liaison entre la courroie 123 et l'ensemble à rideau 106. A cet effet, le dispositif de liaison 126 est fixé sur le rideau 106.1 ou la barre transversale 106.2 et comporte un mécanisme à mâchoires enserrant une portion de la courroie 123. L'ensemble à rideau 106 est ainsi solidaire en translation de la courroie 123.

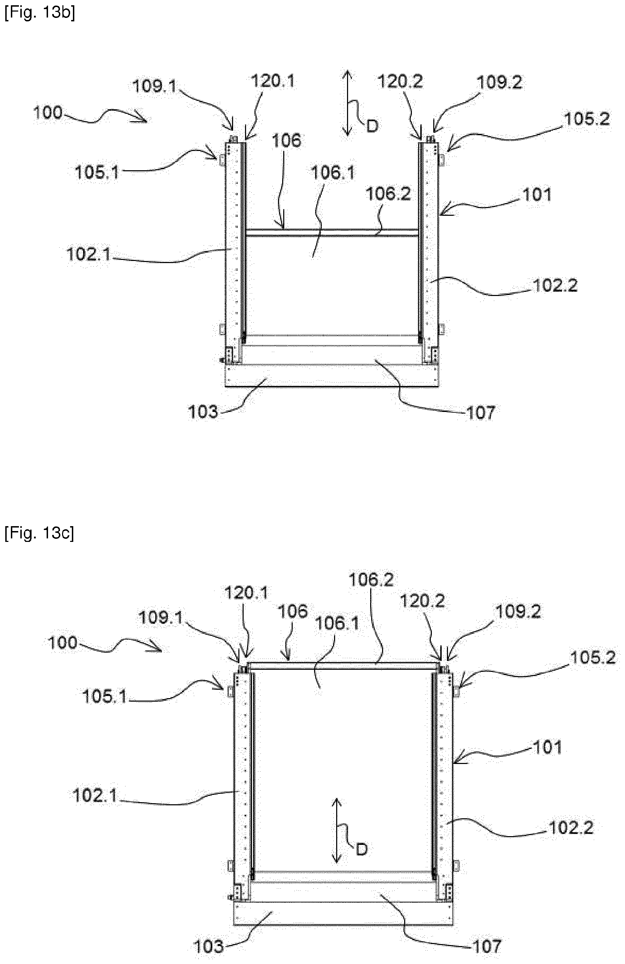

Lors d'une phase d'utilisation, le passager peut saisir la barre transversale 106.2 pour déplacer manuellement le rideau 106.1 suivant une direction de déplacement D parallèle à une direction longitudinale d'un montant 102.1, 102.2 entre une position stockée dans laquelle le rideau flexible 106.1 est majoritairement enroulé autour du rouleau 107 de façon à libérer l'espace, tel que montré sur la figure 13a, et une position déployée dans laquelle le rideau flexible 106.1 est majoritairement déroulé par rapport au rouleau 107 de façon à fermer l'espace, tel que montré sur la figure 13c. Le rideau 106.1 pourra également prendre des positions intermédiaires, tel que montré sur la figure 13b.

Une extrémité de la barre transversale 106.2 est apte à coulisser à l'intérieur d'une rainure 128.1, 128.2 ménagée dans un montant 102.1, 102.2 correspondant lors du déplacement du rideau 106.1 d'une position à une autre.

Avantageusement, comme on peut le voir sur la figure 14, un ressort de rappel 130 du rideau 106.1 est configuré pour tendre le rideau 106.1 lorsque ce dernier est en position déployée. Ce ressort de rappel 130 pourra être un ressort de torsion monté sur un axe du rouleau 107. Le ressort de rappel 130 comporte une extrémité solidaire du rouleau 107 et une extrémité fixée sur le bâti 101.

Un ressort d'assistance au déploiement 131 du rideau 106.1 permet de faciliter le déploiement du rideau 106.1 lorsque le passager le tire de la position stockée vers la position déployée, tel que montré sur la figure 15. Le ressort d'assistance au déploiement 131 consiste avantageusement en un ressort de torsion ayant une extrémité fixée sur le bâti 101 et une extrémité fixée sur au moins une poulie 122. Le ressort d'assistance au déploiement 131 est disposé sur un axe 132 parallèle à l'axe du rouleau 107. Les poulies 122 sont de préférence montées sur l'axe 132.

Comme on peut le voir sur la figure 16, un galet rotatif 133 lié à l'ensemble à rideau 106 est apte à rouler le long d'une paroi d'un montant 102.1, 102.2 lorsque le rideau 106.1 est déplacé d'une position à une autre. Afin de contrôler le déplacement du rideau 106.1, le galet rotatif 133 vient en appui contre une butée d'arrêt 134 lorsque le rideau 106.1 est en position déployée.

Il sera possible d'utiliser un galet 133 par montant 102.1, 102.2, c'est-à-dire deux galets 133 pour le dispositif de fermeture amovible 100, ou un seul galet 133 pour un seul montant parmi les deux montants 102.1 ou 102.2. En variante, il serait également possible d'utiliser plus d'un galet 133 de guidage par montant 102.1, 102.2.

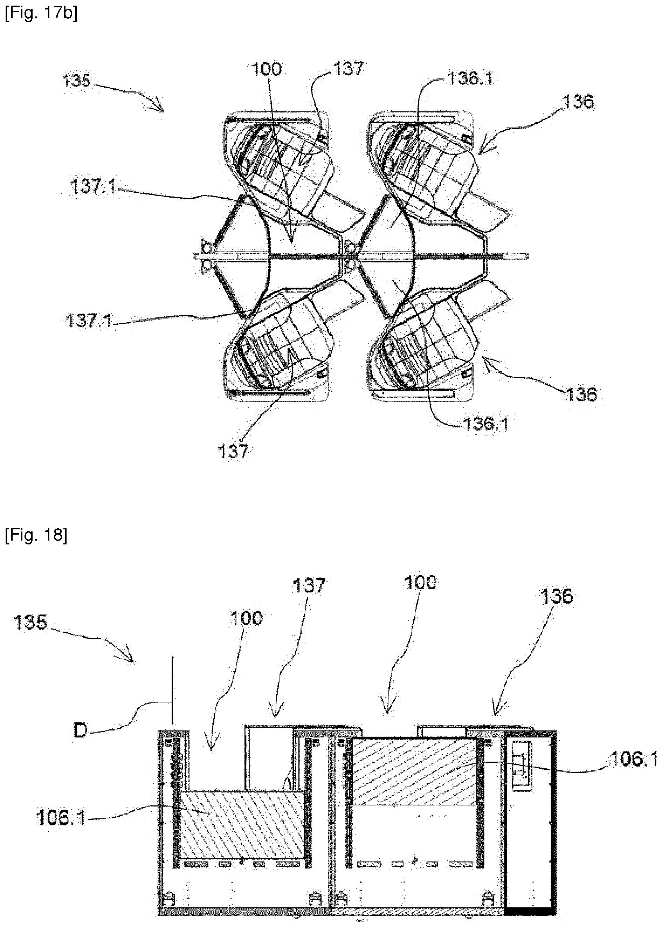

Les figures 17a et 17b montrent un dispositif de fermeture amovible 100 intégré dans un ensemble de sièges d'avion 135 comportant deux sièges avant 136 associés chacun à une coque avant 136.1 et deux sièges arrière 137 associés chacun à une coque arrière 137.1.

Un dispositif de fermeture amovible 100 est disposé entre un siège avant 136 et un siège arrière 137. A cet effet, le premier montant 102.1 est fixé sur la coque avant 136.1 d'un siège avant 136 via son interface de fixation 105.1 ; tandis que le deuxième montant 102.2 est fixé sur la coque arrière 137.1 d'un siège arrière 137 via son interface de fixation 105.2. A cet effet, une interface de fixation d'un montant 102.1, 102.2 comporte des trous de passage d'organes de fixation, tels que des vis, des rivets, ou des goujons, ou autres organes adaptés à l'application, traversant également des trous réalisés dans la coque 136.1, 137.1 correspondante.

Lors d'une phase de montage, on commence par fixer un montant du dispositif de fermeture 100 sur une des coques, par exemple la coque arrière 137.1, puis l'autre coque, par exemple la coque avant 136.1, est fixée sur l'autre montant du dispositif de fermeture 100.

L'invention permet ainsi, grâce à l'intégration du dispositif de fermeture 100, de pouvoir aisément isoler les deux sièges arrière 137 disposés côte à côte, ou au contraire de permettre la communication entre les deux sièges arrière 137.

L'invention présente également l'avantage d'être aisément intégrable dans la cabine d'avion et de pouvoir être facilement dégagée du passage en cas d'accident du fait du caractère flexible du rideau.

Dans le mode de réalisation de la figure 18, le rideau flexible 106.1 est entièrement mobile en translation suivant la direction de déplacement D, de telle façon que le rideau flexible 106.1 s'étend dans un plan en position stockée et en position déployée. Autrement dit, le rideau flexible 106.1 est simplement déplacé en translation sans être enroulé ni plié lorsqu'il passe de la position déployée vers la position stockée.

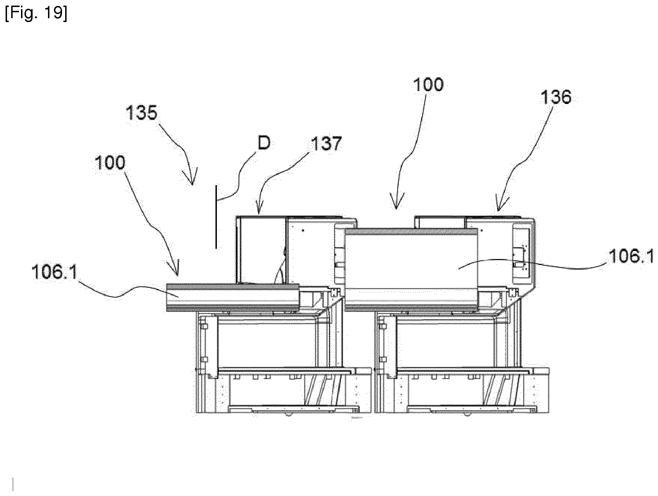

Dans le mode de réalisation de la figure 19, le rideau flexible 106.1 peut être déplacé suivant la direction de déplacement D entre une position stockée dans laquelle le rideau flexible 106.1 est plié, notamment en accordéon, et une position déployée dans laquelle le rideau flexible 106.1 s'étend dans un plan. Dans ce cas, les plis de l'accordéon se superposent verticalement les uns sur les autres lorsque le rideau flexible 106.1 est en position stockée.

## Revendications

1. Espace à l'intérieur d'un avion avec un dispositif de fermeture amovible (100) dudit espace, comportant:
- un bâti (101) comprenant un premier montant et un deuxième montant (102.1, 102.2),
- un ensemble à rideau (106) comportant un rideau flexible (106.1),
- au moins un dispositif de guidage (109.1, 109.2) apte à assurer un guidage en translation du rideau flexible (106.1) par rapport aux montants (102.1, 102.2), de telle façon que le rideau flexible (106.1) est apte à être déplacé suivant une direction de déplacement (D) parallèle à une direction longitudinale des montants (102.1, 102.2) entre une position stockée dans laquelle le rideau flexible (106.1) est dégagé de l'espace et une position déployée dans laquelle le rideau flexible obture l'espace, et
- un montant (102.1, 102.2) délimitant un logement (120.1, 120.2) dans lequel est disposé au moins en partie le dispositif de guidage (109),
- ledit dispositif de fermeture amovible (100) comportant en outre un rouleau (107) autour duquel peut s'enrouler le rideau flexible (106.1), de telle façon que le rideau flexible (106.1) est apte à être déplacé suivant la direction de déplacement (D) entre une position stockée dans laquelle le rideau flexible (106.1) est majoritairement enroulé autour du rouleau (107) et une position déployée dans laquelle le rideau flexible (106.1) est majoritairement déroulé par rapport au rouleau (107),
- ledit premier montant et ledit deuxième montant étant reliés entre eux par un caisson (103) dans lequel le rouleau (107) est disposé au moins en partie,
- ledit bâti (101) comportant au moins une interface de fixation (105.1, 105.2) avec un élément structurel.

2. Espace à l'intérieur d'un avion avec un dispositif de fermeture amovible selon la revendication 1, le rideau flexible (106.1) étant entièrement mobile en translation suivant la direction de déplacement (D) de telle façon que le rideau flexible (106.1) s'étend dans un plan en position stockée et en position déployée.

3. Espace à l'intérieur d'un avion avec un dispositif de fermeture amovible selon la revendication 1, le rideau flexible (106.1) pouvant être déplacé suivant la direction de déplacement (D) entre une position stockée dans laquelle le rideau flexible (106.1) est plié en accordéon et une position déployée dans laquelle le rideau flexible (106.1) s'étend dans un plan.

4. Espace à l'intérieur d'un avion avec un dispositif de fermeture amovible selon l'une quelconque des revendications 1 à 3, le dispositif de guidage (109.1, 109.2) consistant en un dispositif à courroie.

5. Espace à l'intérieur d'un avion avec un dispositif de fermeture amovible selon la revendication 4, ledit dispositif à courroie (109.1, 109.2) comportant une première poulie (121) liée en rotation au bâti (101), une deuxième poulie (122) liée en rotation au bâti (101), et une courroie (123) coopérant avec la première poulie (121) et la deuxième poulie (122).

6. Espace à l'intérieur d'un avion avec un dispositif de fermeture amovible selon la revendication 4 ou 5, un dispositif de liaison (126) assurant une liaison entre la courroie (123) et l'ensemble à rideau (106).

7. Espace à l'intérieur d'un avion avec un dispositif de fermeture amovible selon l'une quelconque des revendications 1 à 6, comportant un ressort (131) d'assistance au déploiement du rideau flexible (106.1).

8. Espace à l'intérieur d'un avion avec un dispositif de fermeture amovible selon les revendications 5 et 7, le ressort (131) d'assistance au déploiement du rideau (106.1) consistant en un ressort de torsion ayant une extrémité fixée sur le bâti (101) et une extrémité fixée sur une poulie (121, 122).

9. Espace à l'intérieur d'un avion avec un dispositif de fermeture amovible selon l'une quelconque des revendications 1 à 8, comportant un ressort de rappel (130) du rideau (106.1) configuré pour tendre le rideau (106) lorsque ce dernier est en position déployée.

10. Espace à l'intérieur d'un avion avec un dispositif de fermeture amovible selon l'une quelconque des revendications 1 à 9, comportant au moins un galet rotatif (133) apte à rouler le long d'une paroi du montant (102.1, 102.2) lorsque le rideau (106.1) est déplacé d'une position à une autre.

11. Espace à l'intérieur d'un avion avec un dispositif de fermeture amovible selon la revendication 10, comportant une butée d'arrêt (134) contre laquelle vient en contact le galet rotatif (133) lorsque le rideau (106) est en position déployée.

12. Espace à l'intérieur d'un avion avec un dispositif de fermeture amovible selon l'une quelconque des revendications 1 à 11, l'ensemble à rideau (106) comportant une barre transversale (106.2) rigide fixée à une extrémité du rideau flexible (106.1).

13. Espace à l'intérieur d'un avion avec un dispositif de fermeture amovible selon la revendication 12, une extrémité de la barre transversale (106.2) étant apte à coulisser à l'intérieur d'une rainure (128.1, 128.2) ménagée dans le montant (102.1, 102.2).

14. Ensemble de sièges d'avion (135) comportant:
- un siège avant (136) associé à une coque avant (136.1) et un siège arrière (137) associé à une coque arrière (137.1), et
- un espace à l'intérieur d'un avion avec un dispositif de fermeture amovible (100) tel que défini selon l'une quelconque des revendications précédentes disposé entre le siège avant (136) et le siège arrière (137).

15. Ensemble de sièges selon la revendication 14, le dispositif de fermeture amovible (100) comportant un bâti (101) ayant un premier montant (102.1) muni d'une interface de fixation (105.1) pour assurer une fixation entre le premier montant (102.1) et la coque avant (136.1) du siège avant (136) et un deuxième montant (102.2) muni d'une interface de fixation (105.2) pour assurer une fixation entre le deuxième montant (102.2) et la coque arrière (137.1) du siège arrière (137).

16. Avion comportant un ensemble de sièges tel que défini selon la revendication 14 ou 15.

## Patentansprüche

1. Raum innerhalb eines Flugzeugs mit einer lösbaren Verschlussvorrichtung (100) für den Raum, umfassend:
- einen Rahmen (101) mit einer ersten Stütze und einer zweiten Stütze (102.1, 102.2),
- eine Vorhanganordnung (106) mit einer flexiblen Vorhang (106.1),
- mindestens eine Führungsvorrichtung (109.1, 109.2) zur Translationsführung des flexiblen Vorhangs (106.1) relativ zu den Stützen (102.1, 102.2), so dass der flexible Vorhang (106.1) entlang einer Bewegungsrichtung (D) parallel zu einer Längsrichtung der Stützen (102.1, 102.2) zwischen einer Verstauposition, in der der flexible Vorhang (106.1) von dem Raum gelöst ist, und einer Ausbreitungsposition, in der der flexible Vorhang den Raum schließt, und
- eine Stütze (102.1, 102.2), der ein Gehäuse (120.1, 120.2) begrenzt, in dem die Führungsvorrichtung (109) zumindest teilweise angeordnet ist, wobei
- die lösbare Verschlussvorrichtung (100) ferner eine Rolle (107) umfasst, um die der flexible Vorhang (106.1) gewickelt werden kann, so dass der flexible Vorhang (106.1) in der Bewegungsrichtung (D) zwischen einer Verstauposition, in der der flexible Vorhang (106.1) hauptsächlich um die Rolle (107) aufgerollt ist, und eine Ausbreitungsposition, in der der flexible Vorhang (106.1) hauptsächlich von der Rolle (107) abgerollt ist, bewegt werden kann,
- die erste Stütze und die zweite Stütze miteinander durch einen Kasten (103) verbunden sind, in dem die Rolle (107) zumindest teilweise angeordnet ist,
- der Rahmen (101) mindestens eine Befestigungsschnittstelle (105.1, 105.2) mit einem Strukturelement umfasst.

2. Raum innerhalb eines Flugzeugs mit einer lösbaren Verschlussvorrichtung nach Anspruch 1, wobei der flexible Vorhang (106.1) entlang der Bewegungsrichtung (D) eine vollständige Translationsbewegung ausführen kann, so dass sich der flexible Vorhang (106.1) in einer Ebene in der Verstauposition und in der Ausbreitungsposition erstreckt.

3. Raum innerhalb eines Flugzeugs mit einer lösbaren Verschlussvorrichtung nach Anspruch 1, wobei der flexible Vorhang (106.1) in Bewegungsrichtung (D) zwischen einer Verstauposition, in der der flexible Vorhang (106.1) ziehharmonikaartig gefaltet ist, und eine Ausbreitungsposition, in der sich der flexible Vorhang (106.1) in einer Ebene erstreckt, vollständig bewegbar ist.

4. Raum innerhalb eines Flugzeugs mit einer lösbaren Verschlussvorrichtung nach einem der Ansprüche 1 bis 3, wobei die Führungsvorrichtung (109.1, 109.2) aus einer Riemenvorrichtung besteht.

5. Raum innerhalb eines Flugzeugs mit einer lösbaren Verschlussvorrichtung nach Anspruch 4, wobei die Riemenvorrichtung (109.1, 109.2) eine erste Riemenscheibe (121), die mit dem Rahmen (101) drehbar verbunden ist, und eine zweite Riemenscheibe (122), die mit dem Rahmen (101) drehbar verbunden ist, und einen Riemen (123), der mit der ersten Riemenscheibe (121) und der zweiten Riemenscheibe (122) zusammenwirkt, umfasst.

6. Raum innerhalb eines Flugzeugs mit einer lösbaren Verschlussvorrichtung nach Anspruch 4 oder 5, wobei eine Verbindungsvorrichtung (126) eine Verbindung zwischen dem Riemen (123) und der Vorhanganordnung (106) bereitstellt.

7. Raum innerhalb eines Flugzeugs mit einer lösbaren Verschlussvorrichtung nach einem der Ansprüche 1 bis 6, umfassend eine Feder (131) zum Unterstützen der Ausbreitung des flexiblen Vorhangs (106.1).

8. Raum innerhalb eines Flugzeugs mit einer lösbaren Verschlussvorrichtung nach den Ansprüchen 5 und 7, wobei die Feder (131) zum Unterstützen der Ausbreitung des Vorhangs (106.1) aus einer Torsionsfeder mit einem an dem Rahmen (101) befestigten Ende und einem an einer Riemenscheibe (121, 122) befestigten Ende besteht.

9. Raum innerhalb eines Flugzeugs mit einer lösbaren Verschlussvorrichtung nach einem der Ansprüche 1 bis 8, umfassend eine Rückstellfeder (130) für den Vorhang (106.1), die so konfiguriert ist, dass sie den Vorhang (106) spannt, wenn letzterer in der Ausbreitungsposition ist.

10. Raum innerhalb eines Flugzeugs mit einer lösbaren Verschlussvorrichtung nach einem der Ansprüche 1 bis 9, umfassend mindestens ein Drehrad (133), das geeignet ist, entlang einer Wand der Stütze (102.1, 102.2) zu rollen, wenn der Vorhang (106.1) von einer Position zur anderen bewegt wird.

11. Raum innerhalb eines Flugzeugs mit einer lösbaren Verschlussvorrichtung nach Anspruch 10, umfassend einen Sperranschlag (134), mit dem das Drehrad (133) in Kontakt kommt, wenn der Vorhang (106) in der Ausbreitungsposition ist.

12. Raum innerhalb eines Flugzeugs mit einer lösbaren Verschlussvorrichtung nach einem der Ansprüche 1 bis 11, wobei die Vorhanganordnung (106) eine starre Querstange (106.2) aufweist, die an einem Ende des flexiblen Vorhangs (106.1) befestigt ist.

13. Raum innerhalb eines Flugzeugs mit einer lösbaren Verschlussvorrichtung nach Anspruch 12, wobei ein Ende der Querstange (106.2) in einer Nut (128.1, 128.2) gleiten kann, die in der Stütze (102.1, 102.2) ausgebildet ist.

14. Flugzeugsitzanordnung (135), umfassend:
- einen Vordersitz (136), der einer Vorderschale (136.1) zugeordnet ist, und einen Rücksitz (137), der einer Rückschale (137.1) zugeordnet ist, und
- einen Raum innerhalb eines Flugzeugs mit einer lösbaren Verschlussvorrichtung (100) nach einem der vorhergehenden Ansprüche, der zwischen dem Vordersitz (136) und dem Rücksitz (137) angeordnet ist.

15. Sitzanordnung nach Anspruch 14, wobei die lösbare Verschlussvorrichtung (100) einen Rahmen (101) mit einer ersten Stütze (102.1), die mit einer Befestigungsschnittstelle (105.1) für eine Befestigung zwischen der ersten Stütze (102.1) und der Vorderschale (136.1) des Vordersitzes (136) versehen ist, und einer zweiten Stütze (102.2), der mit einer Befestigungsschnittstelle (105.2) für eine Befestigung zwischen der zweiten Stütze (102.2) und der Rückschale (137.1) des Rücksitzes ( 137) versehen ist, umfasst.

16. Luftfahrzeug mit einer Sitzanordnung nach Anspruch 14 oder 15.

## Claims

1. A space inside an aircraft with a removable closing device (100) for said space, comprising:
- a frame (101) comprising a first upright and a second upright (102.1, 102.2),
- a curtain assembly (106) comprising a flexible curtain (106.1),
- at least one guiding device (109.1, 109.2) capable of guiding the flexible curtain (106.1) in translation relative to the uprights (102.1, 102.2), such that the flexible curtain (106.1) can be moved along a direction of movement (D) parallel to a longitudinal direction of the uprights (102.1, 102.2) between a stored position in which the flexible curtain (106.1) is disengaged from the space and a deployed position in which the flexible curtain closes the space, and
- an upright (102.1, 102.2) delimiting a housing (120.1, 120.2) in which the guiding device (109) is arranged at least partially,
- said removable closing device (100) further comprising a roller (107) around which the flexible curtain (106.1) can be wound, such that the flexible curtain (106.1) can be moved in the direction of movement (D) between a stored position in which the flexible curtain (106.1) is mainly rolled up around the roller (107) and a deployed position in which the flexible curtain (106.1) is mainly unrolled from the roller (107),
- said first upright and said second upright being connected one to another by a box (103) in which the roller (107) is arranged at least partially,
- said frame (101) comprising at least one fixing interface (105.1, 105.2) with a structural element.

2. The space inside an aircraft with a removable closing device according to claim 1, the flexible curtain (106.1) being fully movable in translation along the direction of movement (D) such that the flexible curtain (106.1) extends in a plane in the stored position and in the deployed position.

3. The space inside an aircraft with a removable closing device according to claim 1, the flexible curtain (106.1) being movable in the direction of movement (D) between a stored position in which the flexible curtain (106.1) is accordion-folded and an deployed position in which the flexible curtain (106.1) extends in a plane.

4. The space inside an aircraft with a removable closing device according to any one of the claims 1 to 3, the guiding device (109.1, 109.2) consisting of a belt device.

5. The space inside an aircraft with a removable closing device according to claim 4, said belt device (109.1, 109.2) comprising a first pulley (121) connected in rotation to the frame (101), a second pulley (122) connected in rotation to the frame (101), and a belt (123) cooperating with the first pulley (121) and the second pulley (122).

6. The space within an aircraft with a removable closing device according to claim 4 or 5, a connecting device (126) providing a connection between the belt (123) and the curtain assembly (106).

7. The space inside an aircraft with a removable closing device according to any one of the claims 1 to 6, comprising a spring (131) for assisting the deployment of the flexible curtain (106.1).

8. The space inside an aircraft with a removable closing device according to the claims 5 and 7, the spring (131) for assisting the deployment of the curtain (106.1) consisting of a torsion spring having one end fixed to the frame (101) and one end fixed to a pulley (121, 122).

9. The space inside an aircraft with a removable closing device according to any one of the claims 1 to 8, comprising a return spring (130) for the curtain (106.1) configured to stretch the curtain (106) when the latter is in the deployed position.

10. The space inside an aircraft with a removable closing device according to any one of the claims 1 to 9, comprising at least one rotary wheel (133) capable of rolling along a wall of the upright (102.1, 102.2) when the curtain (106.1) is moved from one position to another.

11. The space inside an aircraft with a removable closing device according to claim 10, comprising a stopper (134) with which the rotary wheel (133) comes into contact when the curtain (106) is in the deployed position.

12. The space within an aircraft with a removable closing device according to any one of the claims 1 to 11, the curtain assembly (106) having a rigid crossbar (106.2) fixed to one end of the flexible curtain (106.1).

13. The space inside an aircraft with a removable closing device according to claim 12, one end of the crossbar (106.2) being capable of sliding inside a groove (128.1, 128.2) formed in the upright (102.1, 102.2).

14. An aircraft seat assembly (135) comprising:
- a front seat (136) associated with a front shell (136.1) and a rear seat (137) associated with a rear shell (137.1), and
- a space inside an aircraft with a removable closing device (100) as defined according to any one of the preceding claims arranged between the front seat (136) and the rear seat (137).

15. The seat assembly according to claim 14, the removable closing device (100) comprising a frame (101) having a first upright (102.1) provided with a fixing interface (105.1) for a fixation between the first upright (102.1) and the front shell (136.1) of the front seat (136) and a second upright (102.2) provided with a fixing interface (105.2) for a fixation between the second upright (102.2) and the rear shell ( 137.1) of the rear seat (137).

16. An aircraft comprising a seat assembly as defined in claim 14 or 15.
